# EUROPÄISCHE PATENTSCHRIFT

(11) **EP 2 351 055 B1**
(45) Veröffentlichungstag und Bekanntmachung des Hinweises auf die Patenterteilung: **20.08.2014**
(21) Anmeldenummer: 09748971.0
(22) Anmeldetag: 06.10.2009
(51) Int. Cl.: F16K 31/06, H01F 7/16, H01F 7/08

(54) **ELEKTROMAGNETISCHE STELLVORRICHTUNG**
ELECTROMAGNETIC REGULATOR
DISPOSITIF D'ACTIONNEMENT ÉLECTROMAGNÉTIQUE

(30) Priorität: 17.10.2008 DE 202008013654 U
(43) Veröffentlichungstag der Anmeldung: 03.08.2011
(73) Patentinhaber: Eto Magnetic GmbH, 78333 Stockach (DE)
(72) Erfinder: BENDER, Stefan, 78234 Engen (DE)
(74) Vertreter: Behrmann, Niels
(86) Internationale Anmeldenummer: PCT/EP2009/007158
(87) Internationale Veröffentlichungsnummer: WO 2010/043320

(56) Entgegenhaltungen:
- DE-U1- 8 813 280
- US-A1- 2003 087 536

## Beschreibung

Die vorliegende Erfindung betrifft eine elektromagnetische Stellvorrichtung nach dem Oberbegriff des Hauptanspruchs. Eine derartige Vorrichtung ist aus dem Stand der Technik allgemein bekannt und wird häufig verwendet, um ein (Schalt-)Ventil zu betätigen, wobei gattungsgemäß die elektromagnetisch angetriebene Ankereinheit mit einem Ventilschieber o.dgl. Baueinheit eines solchen Schaltventils als Stellpartner zum Ausüben einer Stellkraft mittels der linearen Stellbewegung zusammenwirkt.

Ein konkreter, gattungsgemäß als bekannt vorauszusetzender Einsatzfall ist die Verstellung der Nockenwelle eines Verbrennungsmotors. Die gattungsgemäße Stellvorrichtung als Druckventil befindet sich dabei in axialer Position zur Motornockenwelle. Die stehend montierte Stellvorrichtung berührt dabei mit einer endseitigen Stirnfläche der Stößeleinheit das die Nockenwellenverstellung bewirkende Ventil.

Fertigungstoleranzen, thermisch bedingte Effekte o.dgl. Maß beeinflussende Faktoren können dazu führen, dass es zu einem axialen Versatz zwischen dem Schaltventil (genauer: einem Ventilschieber o.dgl. Aggregat desselben) einerseits und dem Stößel der Stellvorrichtung andererseits kommt, d.h. jeweilige Längsachsen durch diese Elemente fluchten nicht mehr, sondern stehen zueinander in einem Abstand.

Bei in der Praxis existierenden Vorrichtungen führt dies dazu, dass etwa die Stirnfläche einer axial versetzt mit der Stößeleinheit zusammenwirkende Ventilschiebereinheit bei Bewegung derselben eine Radialkraft auf die Stößeleinheit ausübt, mit dem Ergebnis, dass es an der Übergangs- bzw. Krafteintragsfläche zu einer Reibung kommt, welche unerwünschten Materialabrieb bis hin zur Funktionsunfähigkeit der Stößeleinheit bewirkt. Aus diesem Grund ist es aus dem Stand der Technik bekannt, entweder die Stößeleinheit mit einer sich verjüngenden Geometrie auszubilden, zusätzlich oder alternativ das eingriffseitige Ende der Stößeleinheit bezogen auf einen Ventilschieber o.dgl. Stellpartner, durch Härtungsmaßnahmen weniger empfindlich gegen unerwünschten Materialabrieb zu machen. Gleichwohl hat sich im praktischen Betrieb herausgestellt, dass gerade der vorbeschriebene, schwer zu vermeidende Achsversatz zwischen Stellpartner und Stößeleinheit zu beträchtlicher Lebensdauerminderung führt.

Dokument DE8813280U offenbart eine elektromagnetische Stellvorrichtung gemäß dem Oberbegriff des Anspruchs 1.

Aufgabe der vorliegenden Erfindung ist es daher, eine gattungsgemäße elektromagnetische Stellvorrichtung insbesondere im Hinblick auf schädliche Reib- bzw. Querkräfte zu verbessern, welche aus einem nicht fluchtenden bzw. koaxialen, sondern axial versetzten Zusammenwirken von Stößeleinheit und Stellpartner auf eine endseitige Stirn- bzw. Eingriffsfläche der Stößeleinheit wirken.

Die Aufgabe wird durch die elektromagnetische Stellvorrichtung mit den Merkmalen des Hauptanspruchs gelöst; vorteilhafte Weiterbildungen der Erfindung sind in den Unteransprüchen beschrieben.

In erfindungsgemäß vorteilhafter Weise ist dabei die Stößeleinheit mit einem käfigartigen Halteabschnitt versehen, in welche eine Lauf- und Lagerkugel drehbar so eingesetzt ist, dass diese als Reaktion auf die vorbeschriebene Reib- oder Querkraft auf die Kugel eine Rotationsbewegung im Halteabschnitt durchführen kann und so einen möglichen reibungsbedingten Materialabtrag signifikant reduziert.

Bevorzugt ist dabei der Halteabschnitt, endseitig der Stößeleinheit, so ausgebildet, dass dieser einstückig, damit aus dem Material der Stößeleinheit und ohne zusätzliches Bauelement herausgebildet, so wirkt, dass damit einerseits wirksam ein Innenraum (als Aufnahmekammer für die Kugel) begrenzt bzw. abgeschlossen wird, so dass die Kugel nicht herausfallen kann, gleichzeitig jedoch einen vorbestimmten Abschnitt zum Ausüben ihrer Lauf- und Lagerwirkung aus dem käfigartigen Halteabschnitt heraustreten kann, andererseits innerhalb der Aufnahmekammer die Voraussetzungen für ein zuverlässiges, freies und in der beschriebenen Weise Reibkräfte aufnehmendes Rollen (Rotationsbewegung) geschaffen werden.

Zu diesem Zweck ist es vorteilhaft, einen endseitigen Randabschnitt der Aufnahmekammer durch entsprechendes einwärtiges (d.h. radial in Richtung auf die Mittenachse gerichtetes) Bördeln oder Falzen zum Ausbilden eines Verriegelungsabschnittes zu gestalten, wobei der entsprechende Wandabschnitt bei dieser Realisierungsform der Erfindung und bei eingesetzter Lauf- bzw. Lagerkugel durch entsprechenden deformierenden Werkzeugeinsatz hergestellt wird. Vorteilhaft ist es, das (radiale) Maß des Bördelns, also das Verringern der lichten Weite in Querrichtung (und damit senkrecht zur linearen Stellbewegung der Stößeleinheit) auf etwa 0,5 % bis 5 % bezogen auf den Durchmesser der Kugel einzurichten.

Alternativ und als weitere bevorzugte Realisierungsform der Erfindung ist es vorgesehen (wiederum in einstückiger Ausgestaltung am Eingriffsende der Stößeleinheit), die endseitige Wand der Aufnahmekammer mit einer Hinterschneidung zu realisieren, welche wiederum (ganz oder abschnittsweise radial umlaufend) eine lichte Weite der Aufnahmekammer begrenzt und so das unbeabsichtigte Herausfallen der Kugel verhindert, mithin die erfindungsgemäße Schnapp- und/oder Verriegelungswirkung erzeugt.

Auf diese Weise lässt sich dabei nicht nur zuverlässig und in der beschriebenen Weise vorteilhaft reibungsmindernd und materialschonend eine Aufnahme für eine Lauf- bzw. Lagerkugel zur Kraftübertragung auf den Stellpartner realisieren, auch ist eine derartige Vorgehensweise einfach in der Montage, nicht zuletzt als durch einfaches Einschnappen oder Einklipsen die Lauf- bzw. Lagerkugel in den Haltekäfig eingesetzt werden kann.

Im Rahmen bevorzugter Weiterbildungen der Erfindung liegt es, die Innenweite des Halteabschnittes, also eine radiale Weite der Aufnahmekammer für die Lauf- bzw. Lagerkugel, mit einem Übermaß bzw. Spiel relativ zum Kugeldurchmesser so auszugestalten, dass einerseits ein zuverlässiges und blockadefreies Rotieren in der gewünschten Weise ermöglicht ist, andererseits unerwünschte Querbewegungen der Kugel verhindert werden. Auch ist durch entsprechende Tiefengestaltung der Aufnahmekammer weiterbildungsgemäß sichergestellt, dass zur zuverlässigen Stellkraftübertragung auf den Stellpartner die Kugel um ein axiales Maß von 10 % bis 30 %, wiederum bezogen auf einen Kugelaußendurchmesser, aus dem Halteabschnitt herausragt.

Während, wie eingangs zum als gattungsbildend vorausgesetzten Stand der Technik beschrieben, die vorliegende Erfindung sich insbesondere eignet, einen fertigungstoleranz- oder temperaturbedingten axialen Versatz zwischen Stößeleinheit und Stellpartner mit einer dadurch hervorgerufenen Reibwirkung zu vermeiden, ist die vorliegende Erfindung nicht auf diesen Anwendungsfall beschränkt und eignet sich prinzipiell für jeden Anwendungsfall einer Kraftübertragung, welche eingriffsseitig durch eine Stößeleinheit auf einen Stellpartner ausgeübt wird. Auch ist der Anwendungsfall "Ventilstellung" bevorzugt, weiter bevorzugt das Verstellen einer Nockenwelle o.dgl. Aggregat eines Verbrennungsmotors, jedoch ist das Einsatzgebiet und die Verwendung der vorliegenden Erfindung hierauf nicht beschränkt.

Weitere Vorteile, Merkmale und Einzelheiten der Erfindung ergeben sich aus der nachfolgenden Beschreibung bevorzugter Ausführungsbeispiele sowie anhand der Zeichnungen;
diese zeigen in
- Fig. 1:: einen Längsschnitt durch eine elektromagnetische Stellvorrichtung als Stellmagnet für eine Nockenwellenverstellung gemäß einer ersten bevorzugten Ausführungsform der Erfindung;
- Fig. 2:: eine vergrößerte Detailansicht analog Fig. 1 mit um ein vorbestimmtes Versatzmaß axial versetztem Stellpartner und
- Fig. 3:: eine Detailansicht des endseitig an der Stößeleinheit vorgesehnen käfigartigen Halteabschnitts mit schnappend eingesetzter Lauf- bzw. Lagerkugel.

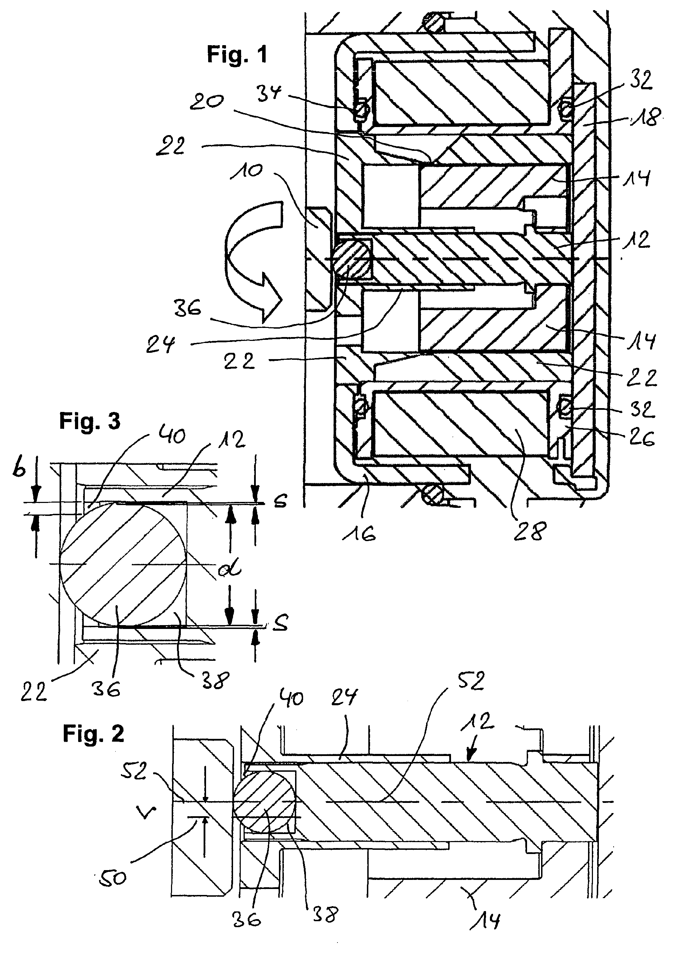

Die Fig. 1 zeigt in der seitlichen Schnittansicht den prinzipiellen Aufbau sowie die Peripherie der elektromagnetischen Stellvorrichtung gemäß einer ersten bevorzugten Ausführungsform, montiert zur Nockenwellenverstellung mittels Druckkraft auf einen lediglich schematisch und geschnitten gezeigten Ventilschieber 10 einer (nicht gezeigten) Schaltventileinheit zur Nockenwellenverstellung eines Verbrennungsmotors.

Die lineare Schubkraft (in der Bildebene der Fig. 1 in axialer Richtung links) auf die Ventilschiebereinheit 10 wird ausgeübt durch eine Stößeleinheit 12, welche Teil einer Ankereinheit der gezeigten elektromagnetischen Stellvorrichtung ist und zusammen mit einem becherförmigen Ankerabschnitt 14 die innerhalb eines zweiteiligen Gehäuses bestehend aus einer Gehäuseschale 16 und einem Gehäuseboden 18 bewegbar geführte Ankereinheit ausbildet. Genauer gesagt ist diese Ankereinheit 12, 14 zum Ausbilden eines magnetischen Kreises umschlossen von einer im vorliegenden Ausführungsbeispiel einstückig mit einem zwischenliegenden, beidseits konisch verjüngten Mittenabschnitt 20 ausgebildeten Jochkerneinheit 22, welche stirnseitig eine Austrittsöffnung für die Stößeleinheit 12 ausbildet und in diesem Bereich eine hohlzylindrische Stößelführung 24 anbietet, die die Stößeleinheit über einen vorbestimmten axialen Längenabschnitt mantelseitig umschließt.

Die Jochkerneinheit 22 ist wiederum radial umgeben von einer Spuleneinheit, welche aus einem Spulenhalter 26 gebildet ist, der in ansonsten bekannter Weise eine Wicklung 28 trägt. Die Bestromung dieser Wicklung führt dann dazu, dass das elektromagnetische Feld der Wicklung die Ankereinheit 12, 14 und damit den Stößel in der Figurenebene in axialer Richtung links aus dem Jochkernabschnitt 22 heraus treibt, dabei eine bewegungsinduzierende Kraft auf die Ventilschiebereinheit 10 ausübt.

Wie in der Schnittansicht der Fig. 1 gezeigt, ist zudem der Spulenhalter 26 über Ringdichtungen 32, 34 gegenüber den Gehäuseelementen 16, 18 gedichtet.

Die Fig. 3 verdeutlicht in der Detailansicht die eingriffsseitige Ausbildung der Stößeleinheit mit einem käfigartigen Halteabschnitt, in welchem eine Lauf- bzw. Lagerkugel 36 drehbar gelagert ist. Genauer gesagt weist die Anordnung der Fig. 1, Fig. 3 endseitig einen hohlzylindrischen Einschnitt 38 in der Stößeleinheit als Aufnahmekammer für die Kugel 36 auf, wobei diese mittels einer am äußeren Ende der Stößeleinheit (bzw. einer Wand der Aufnahmekammer 38) in Form einer nach innen auf die Längs- bzw. Bewegungsachse gerichteten Hinterschneidung 40 gehalten ist. Durch entsprechende Bemessung dieser Hinterschneidung - wie in der Fig. 3 gezeigt ist, weist diese ein radiales Erstreckungsmaß b auf, entsprechend 0,1 mm bei einem typischen Kugeldurchmesser d von 4 mm - kann die Kugel 36 zuverlässig in der Kammer 38 frei drehbar gehalten werden, gleichzeitig wird, günstig für eine einfache Montage, das Einsetzen der Kugel 36 durch einfaches Einklipsen (verbunden mit einem federnden Zurückweichen des Hinterschneidungsabschnitts 40) bewirkt. Dabei ist die Kammer 38 radial so bemessen, dass ein radiales Spiel s zwischen einer Kugelaußenwand und einer radialen Kugelinnenwand hinreichende Drehbarkeit gemäß der Erfindung ermöglicht, wobei zusätzlich vorhandene Schmiermittel dies unterstützen.

Im Ergebnis wird durch diese Maßnahme erreicht, dass etwa die in Fig. 2 gezeigte Betriebssituation (hier ist eine Mittenachse 50 des Ventilschiebers von der Längs- bzw. Symmetrieachse 52 der Stößeleinheit um einen Versatz v von ...mm querversetzt) bei Bewegung des Endes der Ventilschiebereinheit 10 einfach durch Rotation der Kugel 36 aufgenommen werden kann. Insbesondere wird damit vermieden, dass es (etwa wie im bekannten Fall eines statischen Eingriffsendes der Stößeleinheit) zu Abrieb und entsprechend unerwünschtem Verschleiß kommt; auch hat sich herausgestellt, dass eine Aufnahme, insbesondere Reibkraftaufnahme, einer erfindungsgemäß realisierten Einheit das etwa 20-fache eines Krafteintrags sein kann, wie es bei statischen Technologien der Fall ist, mit dem zusätzlichen Vorteil, dass wesentlich weniger genau der (maximal zulässige) Achsversatz kontrolliert werden muss, entsprechend größere Fertigungstoleranzen mit daraus folgenden Kostenminderungen zulässig sein können.

Als Variante zum gezeigten Ausführungsbeispiel ist es erfindungsgemäß möglich, die im Rahmen der Erfindung in dem endseitigen käfigartigen Halteabschnitt frei laufende Kugel mittels einer Umbördelung oder Umfalzung am Stößelende (damit die Verriegelung der Kugel 36 in der Kammer 38 bewirkend) zu realisieren, wobei auch hier fertigungstechnisch günstig einstückig vorgegangen wird, d.h. vorteilhaft kein weiteres Bauelement erforderlich ist (auch wenn dies prinzipiell im Rahmen der Erfindung möglich wäre, um in der erforderlichen Weise die Lauf- bzw. Lagerkugel im käfigartigen Halteabschnitt zuverlässig zu halten).

Im Ergebnis wird durch die vorliegende Erfindung in überraschend einfacher und eleganter Weise eine Anpassung von elektromagnetischen Stellvorrichtungen an zusammenwirkende Stellpartner, insbesondere Schaltventile o.dgl., erreicht, bei welchen, bedingt durch fertigungs- oder temperaturbedingte Toleranzen, nicht stets koaxiales Zusammenwirken erreicht werden kann, sondern ein Achsversatz in Richtung senkrecht zur Stellrichtung aufgenommen werden muss.

## Patentansprüche

1. Elektromagnetische Stellvorrichtung mit
einer durch Bestromung einer stationären Spuleneinheit (26, 38) bewegbaren, eine Stößeleinheit (12) zum Durchführen einer linearen Stellbewegung aufweisenden Ankereinheit,
wobei die Stößeleinheit endseitig zum Zusammenwirken mit einem Stellpartner (10) ausgebildet ist und sich in axialer Position zu diesem befindet,
**dadurch gekennzeichnet, dass**
die Stößeleinheit endseitig eine Lauf- und Lagerkugel (36) aufweist, die in einem käfigartigen Halteabschnitt (38, 40) der Stößeleinheit beweglich so gehalten ist, dass sie als Reaktion auf eine durch eine Bewegung des Stellpartners und einen axialen Versatz (v) zwischen einer Mittenachse (50) des Stellpartners und einer Längs- bzw. Symmetrieachse (52) der Stößeleinheit senkrecht zur Richtung der linearen Stellbewegung angreifende Reibkraft eine Rotationsbewegung durchführen kann.

2. Vorrichtung nach Anspruch 1, **dadurch gekennzeichnet, dass** der käfigartige Halteabschnitt ein schnappendes Einsetzen oder ein Einklipsen der Lauf- bzw. Lagerkugel bei einer Montage erlaubt.

3. Vorrichtung nach Anspruch 1 oder 2, **dadurch gekennzeichnet, dass** der käfigartige Halteabschnitt endseitig einen Schnapp- und/oder Verriegelungsabschnitt (40) aufweist, der zumindest abschnittsweise eine lichte Weite einer Aufnahmekammer für die Lauf- bzw. Lagerkugel auf ein unterhalb des Kugeldurchmessers liegendes Maß, gemessen in der Richtung senkrecht zur Richtung der linearen Stellbewegung, verringert.

4. Vorrichtung nach Anspruch 3, **dadurch gekennzeichnet, dass** der Verriegelungsabschnitt mittels eines zumindest abschnittsweisen randseitigen Bördelns oder Falzens einer die Aufnahmekammer (38) begrenzenden Wand realisiert ist.

5. Vorrichtung nach Anspruch 3, **dadurch gekennzeichnet, dass** der Schnapp- und/oder Verriegelungsabschnitt durch eine zumindest abschnittsweise randseitig gebildete Hinterschneidung (40) an oder in einer die Aufnahmekammer (38) begrenzenden Wand realisiert ist.

6. Vorrichtung nach einem der Ansprüche 3 bis 5, **dadurch gekennzeichnet, dass** das Verringern der lichten Weite in der Richtung senkrecht zur linearen Stellbewegung radial auf ein Maß (b) erfolgt, welches zwischen 0,5 % und 5 % bezogen auf den Durchmesser der Lauf- bzw. Lagerkugel erfolgt.

7. Vorrichtung nach einem der Ansprüche 1 bis 6, **dadurch gekennzeichnet, dass** eine lichte Innenweite des Halteabschnitts senkrecht zu der Richtung der linearen Stellbewegung mit einem vorbestimmten Spiel oder Übermaß (s) an einen Durchmesser der Lauf- bzw. Lagerkugel angepasst ist.

8. Vorrichtung nach einem der Ansprüche 3 bis 7, **dadurch gekennzeichnet, dass** eine axiale Tiefe der Aufnahmekammer so bemessen ist, dass die Lauf- bzw. Lagerkugel um ein Maß zwischen 10 % und 30 % bezogen auf den Kugeldurchmesser aus einer stirnseitigen Endfläche der Stößeleinheit heraussteht.

9. Vorrichtung nach einem der Ansprüche 1 bis 8, **dadurch gekennzeichnet, dass** der Stellpartner als Ventilbaugruppe, insbesondere Ventilschieber, eines Schaltventils ausgebildet ist.

10. Vorrichtung nach Anspruch 9, **dadurch gekennzeichnet, dass** das Schaltventil zur Nockenwellenverstellung eines Verbrennungsmotors ausgebildet oder eingerichtet ist.

## Claims

1. An electromagnetic actuation device having
an armature unit, which can be moved by powering a stationary coil unit (26, 38) and has a tappet unit (12) for carrying out a linear adjusting movement,
wherein the tappet unit is constructed at one end for interaction with an adjusting partner (10) and is located in an axial position with respect to the same,
**characterised in that**
the tappet unit has a running and positioning ball (36) at the end, which is movably held in a cage-like retaining section (38, 40) of the tappet unit in such a manner that it can carry out a rotational movement as a reaction to a frictional force acting perpendicularly to the direction of the linear adjusting movement due to a movement of the adjusting partner and an axial offset (v) between a central axis (50) of the adjusting partner and a longitudinal axis or axis of symmetry (52) of the tappet unit.

2. The device according to claim 1, **characterised in that** the cage-like retaining section allows a snapping insertion or clipping in of the running or positioning ball during installation.

3. The device according to claim 1 or 2, **characterised in that** the cage-like retaining section has a snapping and/or locking section (40), which reduces a clearance width of an accommodating chamber for the running or positioning ball at least in certain sections to a dimension smaller than the ball diameter, measured in the direction perpendicular to the direction of the linear adjusting movement.

4. The device according to claim 3, **characterised in that** the locking section is realised by means of an edge-side beading or folding of a wall delimiting the accommodating chamber (38) at least in certain sections.

5. The device according to claim 3, **characterised in that** the snapping and/or locking section is realised by means of an undercut (40) at the edge formed at least in certain sections at or in a wall delimiting the accommodating chamber (38).

6. The device according to one of claims 3 to 5, **characterised in that** the reduction of the clearance width in the direction perpendicular to the linear adjusting movement takes place radially to a dimension (b), which is realised as between 0.5% and 5% with respect to the diameter of the running or positioning ball.

7. The device according to one of claims 1 to 6, **characterised in that** an internal clearance width of the retaining section is adjusted to a diameter of the running or positioning ball perpendicularly to the direction of the linear adjusting movement with a predetermined play or oversize (s).

8. The device according to one of claims 3 to 7, **characterised in that** an axial depth of the accommodating chamber is dimensioned such that the running or positioning ball protrudes from a front end face of the tappet unit by an amount of between 10% and 30% with respect to the ball diameter.

9. The device according to one of claims 1 to 8, **characterised in that** the adjusting partner is constructed as a valve assembly, particularly valve slider, of a control valve.

10. The device according to claim 9, **characterised in that** the control valve is constructed or set up for camshaft control of an internal combustion engine.

## Revendications

1. Dispositif de commande électromagnétique, comprenant une unité d'induit déplaçable par l'alimentation électrique d'une unité de bobine stationnaire (26, 38), présentant une unité de poussoir (12) pour effectuer un mouvement de commande linéaire, l'unité de poussoir étant réalisée à son extrémité de manière à coopérer avec un partenaire de commande (10) et se trouvant en position axiale par rapport à celui-ci, **caractérisé en ce que** l'unité de poussoir présente, à son extrémité, une bille de roulement et de palier (36) qui est retenue de manière déplaçable dans une portion de retenue de type cage (38, 40) de l'unité de poussoir, de telle sorte qu'elle puisse effectuer un mouvement de rotation en réaction à une force de frottement agissant par un mouvement du partenaire de commande et un décalage axial (v) entre un axe médian (50) du partenaire de commande et un axe longitudinal ou de symétrie (52) de l'unité de poussoir perpendiculairement à la direction du mouvement de commande linéaire.

2. Dispositif selon la revendication 1, **caractérisé en ce que** la portion de retenue de type cage permet une insertion par enclenchement ou un encliquetage de la bille de roulement ou de palier lors d'un montage.

3. Dispositif selon la revendication 1 ou 2, **caractérisé en ce que** la portion de retenue de type cage présente, à son extrémité, une portion d'encliquetage et/ou de verrouillage (40) qui réduit au moins en partie une dimension intérieure d'une chambre de réception pour la bille de roulement ou de palier à une mesure inférieure au diamètre de la bille, mesurée dans la direction perpendiculaire à la direction du mouvement de commande linéaire.

4. Dispositif selon la revendication 3, **caractérisé en ce que** la portion de verrouillage est réalisée au moyen d'un bordage ou d'un pliage, au moins en partie du côté du bord, d'une paroi limitant la chambre de réception (38).

5. Dispositif selon la revendication 3, **caractérisé en ce que** la portion d'encliquetage et/ou de verrouillage est réalisée par une contre-dépouille (40) formée au moins en partie du côté du bord, au niveau d'une ou dans une paroi limitant la chambre de réception (38).

6. Dispositif selon l'une quelconque des revendications 3 à 5, **caractérisé en ce que** la réduction de la dimension intérieure dans la direction perpendiculaire au mouvement de commande linéaire s'effectue radialement à une mesure (b) qui est comprise entre 0,5 % et 5 % par rapport au diamètre de la bille de roulement ou de palier.

7. Dispositif selon l'une quelconque des revendications 1 à 6, **caractérisé en ce qu'**une dimension intérieure de la portion de retenue perpendiculairement à la direction du mouvement de commande linéaire est adaptée avec un jeu ou un surdimensionnement prédéterminé (s) à un diamètre de la bille de roulement ou de palier.

8. Dispositif selon l'une quelconque des revendications 3 à 7, **caractérisé en ce qu'**une profondeur axiale de la chambre de réception est dimensionnée de telle sorte que la bille de roulement ou de palier dépasse d'une mesure comprise entre 10 % et 30 % par rapport au diamètre de la bille depuis une face d'extrémité du côté frontal de l'unité de poussoir.

9. Dispositif selon l'une quelconque des revendications 1 à 8, **caractérisé en ce que** le partenaire de commande est réalisé sous forme de module de soupape, en particulier sous forme de tiroir de soupape, d'une soupape de commande.

10. Dispositif selon la revendication 9, **caractérisé en ce que** la soupape de commande est réalisée ou prévue pour le réglage d'arbre à cames d'un moteur à combustion interne.
